# EUROPÄISCHE PATENTSCHRIFT

(11) **EP 2 516 149 B1**
(45) Veröffentlichungstag und Bekanntmachung des Hinweises auf die Patenterteilung: **11.09.2013**
(21) Anmeldenummer: 10792927.5
(22) Anmeldetag: 16.12.2010
(51) Int. Cl.: B32B 5/18, F16C 33/02

(54) **SCHICHTVERBUNDWERKSTOFF**
LAMINATE COMPOSITE
MATÉRIAU COMPOSITE STRATIFIÉ

(30) Priorität: 23.12.2009 DE 102009055239
(43) Veröffentlichungstag der Anmeldung: 31.10.2012
(73) Patentinhaber: Federal-Mogul Wiesbaden GmbH, 65201 Wiesbaden (DE)
(72) Erfinder: ADAM, Achim, 64569 Nauheim (DE)
(74) Vertreter: Mehler Achler
(86) Internationale Anmeldenummer: PCT/EP2010/069915
(87) Internationale Veröffentlichungsnummer: WO 2011/076662

(56) Entgegenhaltungen:
- DE-A1- 19 507 045
- GB-A- 2 139 236
- DATABASE WPI Week 200062 Thomson Scientific, London, GB; AN 2000-640827 XP002626478, -& JP 2000 192961 A (OILESS IND CO LTD) 11. Juli 2000 (2000-07-11)

## Beschreibung

Die vorliegende Erfindung betrifft einen Schichtverbundwerkstoff umfassend einen Grundkörper, eine auf dem Grundkörper angeordnete poröse Schicht, und einen weiteren Werkstoff, der ein Kunststoff ist oder Kunststoff umfasst und mit der porösen Schicht haftend verbunden ist. Weiterhin betrifft die vorliegende Erfindung eine Verwendung von Fluorthermoplasten zum Verbinden des weiteren Werkstoffs mit der porösen Schicht des Schichtverbundwerkstoffs sowie ein Verfahren zum Herstellen eines Schichtverbundwerkstoffes.

Derartige Schichtverbundwerkstoffe werden insbesondere als Lagerwerkstoffe für Gleitlager eingesetzt. Die Schichtverbundwerkstoffe weisen dabei üblicherweise einen Grundkörper auf, auf dem eine poröse, meist metallische Schicht aufgebracht ist, die mit einem weiteren Werkstoff imprägniert ist und von diesem eingeschlossen wird. Dieser weitere Werkstoff ist typischerweise ein Kunststoff. Hierbei kommen vorwiegend zwei Arten von Kunststoffen zum Einsatz: Kunststoffe auf PTFE-Basis und thermoplastisch verarbeitbare Kunststoffe.

Je nach Beanspruchungen lassen sich die Schichtverbundwerkstoffe in Gleitlagern auf ungeschmierte, initialgeschmierte und mediengeschmierte Weise anwenden. Initialgeschmierte Gleitlager werden beim Einbau einmal beispielsweise mit Fett geschmiert. Die verwendeten Werkstoffe verhalten sich in diesen Anwendungsweisen unterschiedlich. Wichtige Werkstoffeigenschaften in mediengeschmierten Anwendungen sind neben der Verträglichkeit mit dem Schmiermedium die Erosions-, Delaminations- und Kavitationsbeständigkeit des entsprechenden Schichtverbundwerkstoffes. Es kann im Lagerspalt zu Strömungsverhältnissen kommen, welche den Schichtverbundwerkstoff angreifen oder zum Eindringen des Schmiermediums in den Schichtverbundwerkstoff führen, wodurch die Schichten voneinander abgelöst werden. Ebenfalls wichtig ist die im Zusammenspiel mit dem Schmiermedium entstehende Reibung, da letztere zum Beispiel in der Anwendung für Führungsbuchsen in Stoßdämpfern das Ansprechverhalten oder in Pumpen den Wirkungsgrad beeinflusst.

Die Eigenschaften der verwendeten weiteren Werkstoffe in mediengeschmierten Anwendungen lassen sich wie folgt charakterisieren: Bei der Verwendung von thermoplastischen Matrixkunststoffen entstehen aufgrund der größeren Festigkeit und der damit verbundenen besseren Verankerung in der porösen Schicht kaum mit den Strömungsverhältnissen im Zusammenhang stehende mechanische Schäden. Allerdings ist die Reibung von thermoplastischen Matrixkunststoffen in Verbindung mit Medien deutlich höher als bei Werkstoffen auf PTFE-Basis. Letztere zeichnen sich typischerweise durch einen besonders niedrigen Reibkoeffizienten bei Medienschmierung aus, während ihre Strömungsbeständigkeit aufgrund der weichen PTFE-Matrix begrenzt ist. Darüber hinaus wird die Verankerung des weiteren Werkstoffes auf PTFE-Basis in der porösen Schicht im Gegensatz zu Thermoplasten durch keinerlei Adhäsionskräfte unterstützt.

Schichtverbundwerkstoffe, die einen weiteren Werkstoff auf PTFE-Basis umfassen, werden seit vielen Jahren in mediengeschmierten Anwendungen mit hoher Strömungsbelastung eingesetzt. Hierbei wird beispielsweise die PTFE-Basis des weiteren Werkstoffs mit MoS₂ als Festschmierstoff modifiziert. Diese Art von Schichtverbundwerkstoffen kommt beispielsweise in Stoßdämpfern zum Einsatz, bei denen aufgrund von Anforderungen an den Fahrkomfort ein möglichst reibungsarmes Ansprechverhalten erforderlich ist.

Die Belastbarkeit derartiger Schichtverbundwerkstoffe für ungeschmierte oder trockene und mediengeschmierte Anwendungen ist jedoch begrenzt. Daher sind für mediengeschmierte Anwendungen speziell verschleißoptimierte Schichtverbundwerkstoffe auf PTFE-Basis entwickelt worden, wie z.B. in der DE 196 14 105 B4 beschrieben. Hier wird durch Zugabe von Eisenoxid eine erhöhte Verschleiß- und Kavitationsbeständigkeit erreicht, allerdings stellt sich je nach Anwendungsbedingung eine leichte Erhöhung des Reibwertes ein.

Die DE 198 08 541 C1 beschreibt die Verschleißverbesserung der Gleitschicht durch Zugabe von pulverförmigen Polyaramiden zu PTFE, die jedoch keine Verbesserung der Strömungsbeständigkeit bewirken. Zu diesem Zweck werden den Materialien häufig Fluorthermoplaste PFA, FEP, ETFE, PVDF, PCTFE zugemischt, wie z.B. in der DE 33 43 697 A1 beschrieben. Diese wirken sich positiv auf die Beständigkeit des Materials aus, da sie sich aufgrund der chemischen Struktur fester mit dem PTFE der Gleitschicht verbinden, sich Zusatzstoffe besser einbinden lassen und sich die Haftung am Substrat verbessern lässt, da die Fluorthermoplaste den antiadhäsiven Charakter des PTFE abschwächen. Je mehr aber diese Eigenschaften gewünscht werden, desto mehr Fluorthermoplaste müssen zugemischt werden, was allerdings zur Folge hat, dass die Reibkoeffizienten ansteigen.

In der WO99/05425 wird die Herstellung eines Schichtverbundwerkstoffes mit einer Gleitschicht auf PTFE-Basis beschrieben, bei dem eine Folie auf PTFE-Basis mittels einer Fluorthermoplast-Folie auf ein Metallsubstrat aufgeklebt wird. Dieser Aufbau ist allerdings nicht für poröse Substrate und das damit verknüpfte Herstellungsverfahren mittels einer PTFE-Paste geeignet. Das PTFE-Gemisch kann nicht in Form einer wässrigen Paste in die Poren der porösen Schicht imprägniert werden, wie es beispielsweise in der DE 195 07 045 C2 beschrieben wird, da eine zwischenliegende Folie die Imprägnierung durch Einwalzen behindert und die Folie beim Einwalzprozess nicht nachgeführt werden kann.

Aufgabe dieser Erfindung ist es daher, die Haftung des weiteren Werkstoffs auf der porösen Schicht zu verbessern, ohne dass die gewünschten Oberflächeneigenschaften des weiteren Werkstoffes negativ beeinflusst werden.

Gelöst wird die Aufgabe durch einen an einer Grenzfläche zwischen der porösen Schicht und des weiteren Werkstoffes angeordneten Fluorthermoplasten zum Verbinden des weiteren Werkstoffes mit der porösen Schicht. Der Fluorthermoplast weist eine adhäsive Wirkung auf, so dass der weitere Werkstoff besser an der porösen Schicht haftet. Da der Fluorthermoplast ausschließlich oder nahezu ausschließlich an der Grenzfläche zwischen der porösen Schicht und dem weiteren Werkstoff und nicht an der Oberfläche des weiteren Werkstoffes angeordnet ist, werden die Oberflächeneigenschaften des weiteren Werkstoffes nicht durch den Fluorthermoplast beeinflusst. Insbesondere wird die Reibung der Oberfläche des weiteren Werkstoffes nicht erhöht. Folglich ist es erfindungsgemäß möglich, den weiteren Werkstoff entsprechend den geforderten Oberflächeneigenschaften frei zu wählen, ohne hierbei die Wirkungen des Fluorthermoplasten auf die Oberflächeneigenschaften des weiteren Werkstoffes berücksichtigen zu müssen.

In einer bevorzugten Ausgestaltung des erfindungsgemäßen Schichtverbundwerkstoffes ist der Fluorthermoplast PFA, FEP, ETFE, PVDF, PCTFE oder eine Mischung hieraus. Diese Fluorthermoplaste sind kostengünstig verfügbar und haben sich für als besonders vorteilhaft erwiesen, den weiteren Werkstoff mit verbesserter Haftung an die poröse Schicht anzubringen. Weiterhin stellt die keineswegs abschließend aufgeführte Auswahlmöglichkeit von verwendbaren Fluorthermoplasten eine Flexibilität bereit, die es ermöglicht, die Haftung in Abhängigkeit der Eigenschaften der verwendeten porösen Schicht und des weiteren Werkstoffes zu optimieren. Vorzugsweise sind die eingesetzten Fluorthermoplaste schmelzbar, so dass ihre haftende Wirkung auf die poröse Schicht und den weiteren Werkstoff durch eine Wärmebehandlung aktivierbar ist.

Das Volumen des Fluorthermoplasts nimmt zwischen 5% und 50% und insbesondere zwischen 5% und 25% des Porenvolumens der porösen Schicht ein.

Es hat sich herausgestellt, dass in diesem Bereich die Haftung zwischen dem weiteren Werkstoff und der porösen Schicht optimiert wird. Insbesondere stellt sich ein Haftungsmaximum bei einem Volumen des Fluorthermoplasts zwischen 5% und 25% des Porenvolumens der porösen Schicht ein. Ferner wird hierdurch sichergestellt, dass die Poren der porösen Schicht nicht verschlossen werden. Geht der Anteil an verschlossenen Poren über ein gewisses Maß hinaus, verschlechtern sich die mechanischen Eigenschaften des Schichtverbundwerkstoffs.

Vorzugsweise liegt der Fluorthermoplast in Pulverform vor. Die Aufbringung des Fluorthermoplasten auf die poröse Schicht lässt sich fertigungstechnisch einfach realisieren. Dabei weisen die Partikel des Fluorthermoplasten eine Korngröße von 100 µm oder weniger auf. Damit ist sichergestellt, dass die Partikel in die Poren der porösen Schicht eindringen können und diese nicht verschließen. Verschlossene Poren wirken sich negativ auf die mechanischen Eigenschaften des Schichtverbundwerkstoffes aus.

In einer bevorzugten Ausbildung der vorliegenden Erfindung ist der weitere Werkstoff als eine Gleitschicht ausgebildet. In dieser Ausgestaltung eignet sich der Schichtverbundwerkstoff insbesondere zur Verwendung in Gleitlagern, wobei die erfindungsgemäße Idee nicht auf Gleitlager beschränkt ist.

Vorzugsweise umfasst die Gleitschicht ein PTFE-Basis-Material oder besteht aus diesem. Derartige Materialien zeichnen sich durch niedrige Reibkoeffizienten aus, so dass die Lagerung beispielsweise von Wellen besonders effektiv und Reibungsverlustreduziert gestaltet werden kann.

Vorzugsweise umfasst die Gleitschicht Zusätze von duro- oder thermoplastischen Kunststoffen. Die Verarbeitbarkeit der Gleitschicht kann mit diesen Zusätzen verbessert und ihre mechanischen Eigenschaften gezielt verändert werden, insbesondere in Verbindung mit PTFE-Material.

In einer bevorzugten Ausführungsform der vorliegenden Erfindung ist der thermo- oder duroplastische Kunststoff PFA, FEP, ETFE, PVDF, PCTFE, PEEK, PPS, PA, PPA, LCP, PES, PSU, PEI, PPTA, PBA, PI, PAI oder PPSO₂ oder eine Mischung hieraus. Diese Kunststoffe haben sich insbesondere für die Verwendung der Schichtverbundwerkstoffe in Gleitlagern als besonders vorteilhaft erwiesen. Insbesondere PFA, FEP, ETFE, PVDF und PCTFE bewirken eine Verbesserung der Kavitationsbeständigkeit der Gleitschicht.

Vorzugsweise umfasst die Gleitschicht zusätzlich Festschmierstoffe, Hartpartikel und/oder Fasern. Die Oberflächeneigenschaften der Gleitschicht auf PTFE-Basis lassen sich durch diese Zusätze gezielt verändern und auf den jeweiligen Anwendungsfall anpassen.

Vorzugsweise sind die Festschmierstoffe MoS₂, WS₂, h-BN, Pb, Sn, PbO, Zn, ZnS, BaSO₄, SnS₂, Graphit, CaF₂ oder Schichtsilikate. Exemplarisch hat MoS₂ den Vorteil, dass es als Schmierstoff den niedrigen Reibkoeffizienten des PTFE nicht negativ beeinflusst, gleichzeitig jedoch den Verschleiß der weichen PTFE-Matrix reduziert, so dass sich eine Erhöhung der Lebensdauer der Gleitschicht erzielen lässt.

Vorzugsweise sind die Hartpartikel SiC, Si₃N₄, BC, c-BN, oder Metalloxide. Hartpartikel reduzieren die Abnutzung der Gleitschicht im Betrieb des Schichtverbundwerkstoffes und haben gleichzeitig eine polierende Wirkung auf das mittels des Schichtverbundwerksoffs gelagerte Bauteil, beispielsweise auf eine Welle.

In einer bevorzugten Ausgestaltung sind die Fasern Glas-, Kohle- oder Aramidfasern. Vorteile dieser Ausgestaltung liegen in der hohen Temperaturbeständigkeit, ferner verfügt man über viele Erfahrungswerte im Umgang mit Glas-, Kohle-oder Aramidfasern, so dass deren Einsatz aus technischer Sicht beherrschbar ist.

Vorteilhafterweise umfasst die poröse Schicht Aluminium und/oder Kupfer und/oder Legierungen hiervon. Der Vorteil bei der Verwendung von Aluminium und/oder Kupfer und/oder Legierungen hiervon ist der, dass man über eine große Erfahrung mit diesen Materialien verfügt, die sich für den erfindungsgemäßen Zweck als besonders geeignet erwiesen haben.

Hierbei kann die poröse Schicht ein gesintertes Pulver, ein Metallschaum, ein Streckmetall, ein Vlies oder ein Gewebematerial umfassen. Vorteil der Verwendung von gesintertem Pulver, Metallschaum, Streckmetall, Vlies oder Gewebematerial ist, dass eine große Oberfläche und eine offene Struktur hergestellt werden kann, so dass die Grenzfläche zwischen der porösen Schicht und der Gleitschicht vergrößert wird. Auch durch diese Maßnahme wird die Haftung zwischen der Gleitschicht und der porösen Schicht verbessert.

Vorzugsweise umfasst der Grundkörper Stahl, Aluminium und/oder Kupfer und/oder Legierungen hiervon. Auch in diesem Fall gilt, dass sich diese Werkstoffe als besonders geeignet für den Einsatz in Gleitlagern erwiesen haben und daher eine große Erfahrung bei der Herstellung von aus diesen Werkstoffen aufgebauten Gleitlagern vorhanden ist, auf die vorteilhafterweise zurückgegriffen werden kann.

Ein weiterer Aspekt der vorliegenden Erfindung betrifft eine Verwendung von Fluorthermoplasten zum Verbinden eines weiteren Werkstoffs mit einer porösen Schicht eines Schichtverbundwerkstoffs nach einem der vorherigen Ausführungsformen, wobei der Fluorthermoplast an einer Grenzfläche zwischen der porösen Schicht und dem weiteren Werkstoff angeordnet ist.

Ein weiterer Aspekt der vorliegenden Erfindung betrifft ein Verfahren zum Herstellen eines Schichtverbundwerkstoffs nach einem der vorgenannten Ausführungsformen, umfassend folgende Schritte:
- Aufbringen eines Fluorthermoplasten auf eine poröse Schicht,
- Fixieren des Fluorthermoplasten an der porösen Schicht mittels einer Wärmebehandlung,
- Imprägnieren der porösen Schicht mit einem weiteren Werkstoff, und
- Verkleben der porösen Schicht mit dem weiteren Werkstoff.

Das erfindungsgemäße Verfahren wird vorzugsweise in der oben angegebenen Reihenfolge ausgeführt, wobei der erfindungsgemäße Gedanke nicht auf diese Reihenfolge beschränkt ist.

Die poröse Schicht ist üblicherweise auf dem Grundkörper angeordnet, der bandförmig vorliegt. Der Schritt des Fixierens des Fluorthermoplasten an der porösen Schicht mittels einer Wärmebehandlung lässt sich beispielsweise dadurch realisieren, dass der bandförmige Grundkörper durch einen Durchlaufofen geführt wird oder zusätzlichen Heiz- und/oder Kühlschritte vorgesehen werden. Das Imprägnieren der porösen Schicht mit dem weiteren Werkstoff kann beispielsweise durch Einwalzen geschehen. Das anschließende Verkleben der porösen Schicht mit dem weiteren Werkstoff wird üblicherweise mit einem Sinterprozess realisiert, der vorzugsweise zwischen 350°C und 400°C für 1 bis 3 Minuten durchgeführt wird. Der Schichtverbundwerkstoff kann anschließend durch Walzen auf das gewünschte Endmaß gebracht werden.

Vorzugsweise wird das erfindungsgemäße Verfahren dadurch weitergebildet, dass der Fluorthermoplast als Pulver oder als Dispersion auf die poröse Schicht aufgebracht wird. Pulver hat insoweit Vorteile, als dass die Handhabbarkeit während des Verarbeitens im Vergleich zu einer Dispersion einfacher ist. Beim anschließenden Sinterprozess muss bei einer Dispersion die Flüssigkeit erst aus dem Schichtverbundwerkstoff ausgetragen werden, was den Sinterprozess verlängern und eventuell zu Blasenbildungen führen könnte. Dies ist bei Verwendung eines Fluorthermoplasten in Pulverform nicht der Fall.

Da bei Fluorthermoplasten die Dispersion der Ausgangszustand ist, muss nicht erst ein entsprechendes Pulver hergestellt werden, so dass die Herstellungskosten des Schichtverbundwerkstoffes verringert werden können. Die Aufbringung des Fluorthermoplasten in Form einer Dispersion hat den Vorteil, dass der Fluorthermoplast so auf die poröse Schicht aufgebracht werden kann, dass sich seine zur Haftung beitragende Oberfläche und damit die Haftwirkung erhöhen. Das Verfahren führt aber auch bei Verwendung von Pulver zu zufriedenstellenden Ergebnissen, so dass alle Fluorthermoplaste gut verarbeitet werden können, die in Pulverform oder als Dispersion erhältlich sind.

In Pulverform kann der Fluorthermoplast beispielsweise mittels eines Siebes oder einer Rakelvorrichtung auf die poröse Schicht aufgebracht werden. Liegt der Fluorthermoplast als Dispersion vor, kann der durch Spritzen mittels einer Düse, Übertragen von einer Walzenoberfläche, Übertragen durch Ausdrücken eines Schwamms oder mittels Aufschleudern mit einem rotierenden Teller auf die poröse Schicht aufgebracht werden. Ferner kann die Dispersion mittels eines Siebdruckverfahrens, mittels Kontaktieren mit einem kapillaren Dosiersystem wie Pinsel, Filz oder Geweben auf die poröse Schicht aufgebracht werden.

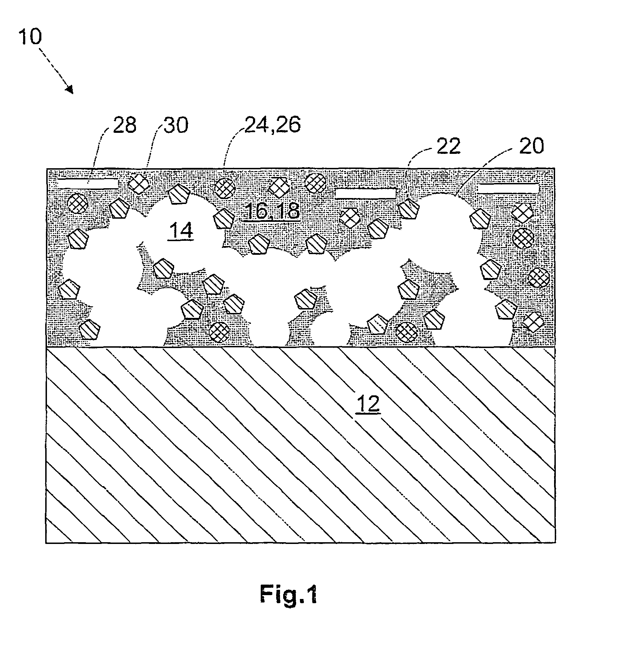

Die Erfindung wird im Folgenden anhand eines bevorzugten Ausführungsbeispiels unter Bezugnahme auf die anhängenden Zeichnungen im Detail erläutert. Es zeigt
- Figur 1: den prinzipiellen Aufbau eines Schichtverbundwerkstoffs gemäß einem Ausführungsbeispiel der vorliegenden Erfindung.

In Figur 1 ist ein Schichtverbundwerkstoff 10 gemäß einem Ausführungsbeispiel anhand einer Prinzipskizze dargestellt. Der Schichtverbundwerkstoff 10 umfasst einen Grundkörper 12, auf dem eine poröse Schicht 14 aufgebracht ist. Um die poröse Schicht 14 ist ein weiterer Werkstoff 16 angeordnet, die im dargestellten Ausführungsbeispiel als Gleitschicht 18 ausgebildet ist. Der als Gleitschicht 18 ausgebildete weitere Werkstoff 16 umfasst typischerweise einen Kunststoff auf PTFE-Basis. Die poröse Schicht 14 und der weitere Werkstoff 16 treffen an einer Grenzfläche 20 aufeinander. Auf dieser Grenzfläche 20 ist ein Fluorthermoplast 22 angeordnet, der eine adhäsive Wirkung aufweist und die poröse Schicht 14 und den weiteren Werkstoff 16 miteinander verbindet. Im dargestellten Beispiel ist der Fluorthermoplast in Pulverform aufgebracht. Der weitere Werkstoff 16 umfasst weiterhin einen Festschmierstoff 24, Hartpartikel 26, Fasern 28 und Duro- oder Thermoplast-Partikel 30, die zum Einstellen der gewünschten Eigenschaften, insbesondere der Oberflächeneigenschaften der Gleitschicht 18 dienen. Die Duro- oder Thermoplaste 30, Festschmierstoffe 24, die Hartpartikel 26 sowie die Fasern 28 werden zufällig in den weiteren Werkstoff 16 eingebracht. Bevorzugte Anordnungen oder Ausrichtungen sind nicht erforderlich.

Die poröse Schicht 14 weist ein Porenvolumen V_{P} auf, welches die Differenz aus dem gesamten von der porösen Schicht 14 eingenommenen Volumen und dem vom Werkstoff, aus dem die poröse Schicht 14 hergestellt ist, eingenommenen Volumen darstellt. Das vom weiteren Werkstoff 16 eingenommene Volumen spielt hierbei keine Rolle. Die Fluorthermoplasten 22 nehmen ein Volumen V_{F} ein.

Wie bereits erwähnt, ist in Figur 1 der Fluorthermoplast 22 in Pulverform aufgebracht, wobei sich die Partikel diskret an der Grenzfläche 20 anordnen. Sofern der Fluorthermoplast 22 auch in disperser Form erhältlich ist, kann dieser auch als Dispersion auf die poröse Schicht 14 aufgetragen werden. Hierbei bildet der Fluorthermoplast 22 an der Grenzfläche 20 eine Art Überzug, der die gesamte Grenzfläche 20 einnehmen kann.

### Ausführungsbeispiele

**Tabelle 1: Vergleich der Reibungskoeffizienten (dimensionslos) von erfindungsgemäßen Schichtverbundwerkstoffen mit herkömmlichen Schichtverbundwerkstoffen.**

| Reibungskoeffizient µ "Stift-Walze" [-], 0,5m/s, 17,5 MPa Tropföl | Ohne Zusatz | PFA 10% Dispersions-Zusatz | PFA 10% Pulver Zusatz | PFA Dispersionsschicht | PFA Pulverschicht | FEP Pulverschicht | ETFE Pulverschicht | PVDF Pulverschicht |
|---|---|---|---|---|---|---|---|---|
| 20% MoS₂ | 0,021 | | 0,024 | | 0,020 | 0,021 | | 0,020 |
| 20% CaF₂ | 0,041 | | 0,045 | | 0,042 | | 0,042 | |
| 20% ZnS | 0,026 | 0,038 | | 0,031 | | 0,029 | | |
| 6% MoS2 | 0,029 | 0,037 | | 0,034 | | | 0,029 | 0,028 |
| 6% hBN 3% | | | | | | | | |
| Fe₂O₃ 5% | | | | | | | | |
| PPTA | | | | | | | | |

Die Reibung wird wie folgt bestimmt: Eine runde Probe wird mit 10 mm Durchmesser auf die Oberfläche einer rotierenden Walze von 100 mm Durchmesser (Geschwindigkeit an der Oberfläche: 0,5 m/s) mit definierter Last (17,5 MPa) angedrückt. Die Probe erhält beim Stanzen eine dem Walzenradius angepasste Form. Die Prüfspur wird mit einem Hydrauliköl benetzt und über einen Drehmomentgeber in der Antriebswelle die von der belasteten Probe aufgebrachte Reibungskraft ermittelt.

In der ersten Spalte sind die gemessenen Werte für die Reibung für Schichtverbundwerkstoffe angegeben, bei denen die Gleitschicht keine Zusätze von Fluorthermoplasten enthält. In der zweiten und dritten Spalte sind die gemessenen Werte für die Reibung für Schichtwerkstoffe angegeben, bei denen Fluorthermoplaste, hier PFA, als Dispersion (Spalte 2) oder in Pulverform (Spalte 3) in die Gleitschicht eingebracht wurden und anschließend dieses Gemisch mit der porösen Schicht verbunden wurde. In den folgenden Spalten 4 bis 8 wurde erfindungsgemäß der Fluorthermoplast, hier PFA, FEP, ETFE und PFDF, auf die poröse Schicht und anschließend die Gleitschicht auf die an ihrer Grenzfläche den Fluorthermoplast aufweisende poröse Schicht aufgebracht.

Wie man aus den Spalten 2 und 3 erkennt, tritt eine Erhöhung in dem Fall ein, dass der Fluorthermoplast mit der Gleitschicht gemischt und anschließend auf die poröse Schicht aufgebracht wird. Wie eingangs erwähnt, ist es bekannt, dass sich die Reibung an der Oberfläche mit steigender Fluorthermoplast-Konzentration erhöht. Dieser Effekt spiegelt sich beim Vergleich der in den Spalten 2 und 3 angegebenen Werte mit den in Spalte 1 angegebenen Vergleichswerten wider. Dadurch, dass die Fluorthermoplaste mit der Gleitschicht gemischt werden und sich dort zufällig verteilen, ist ein bestimmter Anteil der Fluorthermoplaste an der Oberfläche der Gleitschicht angeordnet, wo sie zu einer Erhöhung der Reibung führen. Wie ein Vergleich mit den in den Spalten 4 bis 8 angegebenen Werten erkennen lässt, tritt dieser Effekt erfindungsgemäß nicht oder nur gering auf, da die Fluorthermoplaste erfindungsgemäß nur an der Grenzfläche zwischen der porösen Schicht und der Gleitschicht, also nicht an der Oberfläche der Gleitschicht angeordnet sind.

**Tabelle 2: Vergleich der Haftfestigkeit von erfindungsgemäßen Schichtverbundwerkstoffen mit herkömmlichen Schichtverbundwerkstoffen, gemessen in MPa.**

| Haftfestigkeit Zugversuch [Mpa] | ohne | PFA Dispersionszusatz | PFA Pulverzusatz | PFA Dispersionsschicht | PFA Pulverschicht | FEP Pulver | ETFE Pulver | PVDF Pulver |
|---|---|---|---|---|---|---|---|---|
| 20% MoS2 | 4,6 | | 4,7 | | 5,8 | 5,7 | | 5,5 |
| 20% CaF2 | 4,3 | | 4,5 | | 5,8 | | 5,4 | |
| 20% ZnS | 4,4 | 4,3 | | 5,5 | | 5,2 | | |
| 6% MoS2 6% | 4,5 | 4,5 | | 5,8 | | | 5,8 | 5,3 |
| hBN 3% | | | | | | | | |
| Fe2O3 5% | | | | | | | | |
| PPTA | | | | | | | | |

Die Haftfestigkeit wird wie folgt bestimmt: Anätzen der Probe mit Naphthalin-Natrium, Verkleben mit einem aufgerauten Prüfstempel, Abreißen des Prüfstempels senkrecht zur Klebefläche mit Zwick-Universalprüfmaschine Z050, 0,2 mm/s. Die Spaltenzuordnung entspricht derjenigen von Tabelle 1.

Ein Vergleich der für die Haftfestigkeit gemessenen Werte aus der Spalte 1 mit denen aus den Spalten 2 und 3 zeigt deutlich, dass das Zumischen von Fluorthermoplasten zur Gleitschicht keine nennenswerte Erhöhung der Haftfestigkeit bewirkt. Durch die zufällige Verteilung der Fluorthermoplasten in der Gleitschicht ordnet sich nur ein Teil der Fluorthermoplasten an der Grenzschicht zwischen der porösen und der Gleitschicht an, so dass nur dieser Teil zum Erhöhen der Haftfestigkeit beitragen kann. Im Gegensatz dazu führt die erfindungsgemäße Lösung zu einer signifikanten Erhöhung der Haftfestigkeit, wie die in den Spalten 4 bis 8 angegebenen Werte zeigen. Erfindungsgemäß sind die Fluorthermoplasten nahezu vollständig an der Grenzfläche angeordnet, so dass sie die Haftfestigkeit deutlich stärker erhöhen.

**Tabelle 3: Vergleich der Lebensdauer von erfindungsgemäßen Schichtverbundwerkstoffen mit herkömmlichen Schichtverbundwerkstoffen, gemessen in [h].**

| Lebensdauer Stoßdämpfer Test "Kavitation" [h] | Ohne | PFA Dispersionszusatz | PFA Pulverzusatz | PFA Dispersionsschicht | PFA Pulverschicht | FEP Pulver | ETFE Pulver | PVDF Pulver |
|---|---|---|---|---|---|---|---|---|
| 20% MoS2 | 37 | | 40 | | 72 | 61 | | 49 |
| 20% CaF2 | 39 | | 38 | | 68 | | 55 | |
| 20% ZnS | 22 | 25 | | 36 | | 51 | | |
| 6% MoS2 | 92 | 96 | | >120 (Abbruch) | | | >120 (Abbruch) | 113 |
| 6% hBN | | | | | | | | |
| 3% Fe2O3 | | | | | | | | |
| 5% PPTA | | | | | | | | |

Die Lebensdauer wird wie folgt bestimmt (Stoßdämpfertest Kavitation): Geprüft werden Buchsen mit einer Laufflächenbreite von 10 mm in Zweirohrdämpfern mit einem Stangendurchmesser von 22 mm bei einer konstanten Seitenbelastung von 2000 N. Dabei werden abwechselnd 20 Sekunden lang eine rampenförmige und eine sinusförmige Bewegung von je 0,5 Hz und einer Doppelamplitude von 80 mm ausgeführt, bis die Zerstörung der Gleitschicht zur Undichtigkeit des Dämpfers führt. Nach maximal 120 Stunden wir der Test abgebrochen. Die Spaltenzuordnung entspricht derjenigen der Tabellen 1 und 2.

Ein Vergleich der für die Lebensdauer gemessenen Werte aus der Spalte 1 mit denen aus den Spalten 2 und 3 zeigt deutlich, dass das Zumischen von Fluorthermoplasten zur Gleitschicht keine nennenswerte Erhöhung der Lebendauer bewirkt. Im Gegensatz dazu führt die erfindungsgemäße Lösung zu einer signifikanten Erhöhung der Lebensdauer, wie die in den Spalten 4 bis 8 angegebenen Werte zeigen.

Die Erfindung ist anhand von bevorzugten Ausführungsbeispielen beschrieben worden. Modifikationen und Ergänzungen, die sich dem Fachmann in naheliegender Weise aus der Beschreibung ergeben, weichen nicht vom Gedanken, welcher der vorliegenden Erfindung zugrunde liegt, ab und sind vom Schutzumfang umfasst, welcher durch die nachfolgenden Schutzansprüche definiert wird.

### Bezugszeichenliste

- 10: Schichtverbundwerkstoff
- 12: Grundkörper
- 14: poröse Schicht
- 16: weiterer Werkstoff
- 18: Gleitschicht
- 20: Grenzfläche
- 22: Fluorthermoplast
- 24: Festschmierstoff
- 26: Hartpartikel
- 28: Faser
- 30: Duro- oder Thermoplastpartikel
- V_{P}: Porenvolumen
- V_{F}: Volumen des Fluorthermoplast

## Patentansprüche

1. Schichtverbundwerkstoff umfassend
- einen Grundkörper (12),
- eine auf dem Grundkörper (12) angeordnete poröse Schicht (14), die ein Porenvolumen (V_{P}) aufweist,
- einen weiteren Werkstoff (16), der ein Kunststoff ist oder Kunststoff umfasst und mit dem die poröse Schicht (14) imprägniert ist, und
- einen an einer Grenzfläche (20) zwischen der porösen Schicht (14) und dem weiteren Werkstoff (16) angeordneten Fluorthermoplasten (22) zum Verbinden des weiteren Werkstoffs (16) mit der porösen Schicht (14),
wobei das Volumen (V_{F}) des Fluorthermoplasten im Schichtverbundwerkstoff zwischen 5% und 50% und insbesondere zwischen 5% und 25% des Porenvolumens (V_{P}) einnimmt.

2. Schichtverbundwerkstoff nach Anspruch 1,
**dadurch gekennzeichnet, dass** der Fluorthermoplast (22) PFA, FEP, ETFE, PVDF, PCTFE oder eine Mischung hieraus ist.

3. Schichtverbundwerkstoff nach einem der vorherigen Ansprüche,
**dadurch gekennzeichnet, dass** der Fluorthermoplast (22) in Pulverform vorliegt.

4. Schichtverbundwerkstoff nach Anspruch 3,
**dadurch gekennzeichnet, dass** die Partikel des Fluorthermoplasten (22) eine Korngröße von 100 µm oder weniger aufweisen.

5. Schichtverbundwerkstoff nach einem der vorherigen Ansprüche,
**dadurch gekennzeichnet, dass** der weitere Werkstoff (16) als eine Gleitschicht (18) ausgebildet ist.

6. Schichtverbundwerkstoff nach Anspruch 5,
**dadurch gekennzeichnet, dass** die Gleitschicht (18) ein PTFE-Basis-Material umfasst oder aus diesem besteht.

7. Schichtverbundwerkstoff nach Anspruch 6,
**dadurch gekennzeichnet, dass** die Gleitschicht (18) Zusätze von duro- oder thermoplastischen Kunststoffen, insbesondere in Form von Duro- oder Thermoplastpartikeln (30) umfasst.

8. Schichtverbundwerkstoff nach Anspruch 7,
**dadurch gekennzeichnet, dass** der thermo- oder duroplastische Kunststoff PFA, FEP, ETFE, PVDF, PCTFE, PEEK, PPS, PA, PPA, LCP, PES, PSU, PEI, PPTA, PBA, PI, PAI oder PPSO₂ oder eine Mischung hieraus ist.

9. Schichtverbundwerkstoff nach einem der Ansprüche 5 bis 8,
**dadurch gekennzeichnet, dass** die Gleitschicht (18) Festschmierstoffe (24), Hartpartikel (26) und/oder Fasern (28) umfasst.

10. Schichtverbundwerkstoff nach Anspruch 9,
**dadurch gekennzeichnet, dass** die Festschmierstoffe (24) MoS₂, WS₂, h-BN, Pb, Sn, PbO, Zn, ZnS, BaSO₄, SnS₂, Graphit, CaF₂ oder Schichtsilikate sind.

11. Schichtverbundwerkstoff nach Anspruch 9 oder 10,
**dadurch gekennzeichnet, dass** die Hartpartikel (26) SiC, Si₃N₄, BC, c-BN, oder Metalloxide sind.

12. Schichtverbundwerkstoff nach einem der Ansprüche 9 bis 11,
**dadurch gekennzeichnet, dass** die Fasern (28) Glas-, Kohle- oder Aramidfasern sind.

13. Schichtverbundwerkstoff nach einem der vorherigen Ansprüche,
**dadurch gekennzeichnet, dass** die poröse Schicht (14) Aluminium und/oder Kupfer und/oder Legierungen hiervon umfasst.

14. Schichtverbundwerkstoff nach einem der vorherigen Ansprüche,
**dadurch gekennzeichnet, dass** die poröse Schicht (14) ein gesintertes Pulver, ein Metallschaum, ein Streckmetall, ein Vlies oder ein Gewebematerial umfasst.

15. Schichtverbundwerkstoff nach einem der vorherigen Ansprüche,
**dadurch gekennzeichnet, dass** der Grundkörper (12) Stahl, Aluminium und/oder Kupfer und/oder Legierungen hiervon umfasst.

16. Verwendung eines Fluorthermoplasts (22) zum Verbinden eines weiteren Werkstoffs (16) mit einer porösen Schicht (14) eines Schichtverbundwerkstoffs (10) nach einem der vorherigen Ansprüche, wobei der Fluorthermoplast (22) an einer Grenzfläche (20) zwischen der porösen Schicht (14) und weiteren Werkstoff (16) angeordnet ist.

17. Verfahren zum Herstellen eines Schichtverbundwerkstoffs (10) nach einem der Ansprüche 1 bis 15, umfassend folgende Schritte:
- Aufbringen eines Fluorthermoplasten (22) auf eine poröse Schicht (14), wobei dass das Volumen (V_{F}) des Fluorthermoplasten im Schichtverbundwerkstoff zwischen 5% und 50% und insbesondere zwischen 5% und 25% des Porenvolumens (V_{P}) einnimmt,
- Fixieren des Fluorthermoplasten (22) an der porösen Schicht (22) mittels einer Wärmebehandlung,
- Imprägnieren der porösen Schicht (14) mit einem weiteren Werkstoff (16), und
- Verkleben der porösen Schicht (14) mit dem weiteren Werkstoff (16).

18. Verfahren nach Anspruch 17,
**dadurch gekennzeichnet, dass** der Fluorthermoplast (22) als Pulver oder als Dispersion auf die poröse Schicht (14) aufgebracht wird.

## Claims

1. Laminate composite material, comprising:
- a base member (12),
- a porous layer (14) which is arranged on the base member (12) and which has a pore volume (V_{P}),
- an additional material (16) which is a plastics material or comprises plastics material and with which the porous layer (14) is impregnated, and
- a fluorothermoplastics material (22) which is arranged at a interface (20) between the porous layer (14) and the additional material (16) in order to connect the other material (16) to the porous layer (14),
the volume (V_{F}) of the fluorothermoplastics material in the laminate composite material taking up between 5% and 50% and in particular between 5% and 25% of the pore volume (V_{P}).

2. Laminate composite material according to claim 1, **characterised in that** the fluorothermoplastics material (22) is PFA, FEP, ETFE, PVDF, PCTFE or an admixture thereof.

3. Laminate composite material according to either of the preceding claims,
**characterised in that** the fluorothermoplastics material (22) is in powder form.

4. Laminate composite material according to claim 3, **characterised in that** the particles of the fluorothermoplastics material (22) have a grain size of 100 µm or less.

5. Laminate composite material according to any one of the preceding claims,
**characterised in that** the additional material (16) is formed as a sliding layer (18).

6. Laminate composite material according to claim 5, **characterised in that** the sliding layer (18) comprises or consists of a PTFE-base-material.

7. Laminate composite material according to claim 6, **characterised in that** the sliding layer (18) comprises additives of thermosetting plastics or thermoplastic plastics materials, in particular in form of thermoset or thermoplastic particles (30).

8. Laminate composite material according to claim 7, **characterised in that** the thermoplastic or thermosetting plastics material is PFA, FEP, ETFE, PVDF, PCTFE, PEEK, PPS, PA, PPA, LCP, PES, PSU, PEI, PPTA, PBA, PI, PAI or PPSO₂ or an admixture thereof.

9. Laminate composite material according to any one of claims 5 to 8,
**characterised in that** the sliding layer (18) comprises solid lubricants (24), hard particles (26) and/or fibres (28).

10. Laminate composite material according to claim 9, **characterised in that** the solid lubricants (24) are MoS₂, WS₂, h-BN, Pb, Sn, PbO, Zn, ZnS, BaSO₄, SnS₂, graphite, CaF₂ or laminate silicates.

11. Laminate composite material according to claim 9 or claim 10, **characterised in that** the hard particles (26) are SiC, Si₃N₄, BC, c-BN or metal oxides.

12. Laminate composite material according to any one of claims 9 to 11,
**characterised in that** the fibres (28) are glass, carbon or aramid fibres.

13. Laminate composite material according to any one of the preceding claims,
**characterised in that** the porous layer (14) comprises aluminium and/or copper and/or alloys thereof.

14. Laminate composite material according to any one of the preceding claims,
**characterised in that** the porous layer (14) comprises a sintered powder, a metal foam, an expanded metal, a fleece or a woven material.

15. Laminate composite material according to any one of the preceding claims,
**characterised in that** the base member (12) comprises steel, aluminium and/or copper and/or alloys thereof.

16. Use of a fluorothermoplastics material (22) for connecting an additional material (16) to a porous layer (14) of a laminate composite material (10) according to any one of the preceding claims, the fluorothermoplastics material (22) being arranged at an interface (20) between the porous layer (14) and additional material (16).

17. Method for producing a laminate composite material (10) according to any one of claims 1 to 15, comprising the following steps:
- applying a fluorothermoplastics material (22) to a porous layer (14), the volume (V_{F}) of the fluorothermoplastics material in the laminate composite material taking up between 5% and 50% and in particular between 5% and 25% of the pore volume (V_{P}),
- fixing the fluorothermoplastics material (22) to the porous layer (22) by means of a thermal treatment,
- impregnating the porous layer (14) with an additional material (16), and
- adhesively bonding the porous layer (14) to the additional material (16).

18. Method according to claim 17,
**characterised in that** the fluorothermoplastics material (22) is applied to the porous layer (14) as a powder or a dispersion.

## Revendications

1. Matériau composite stratifié, comprenant
- un corps de base (12),
- une couche poreuse (14) disposée sur ledit corps de base (12) et présentant un volume de pores (V_{P}),
- un matériau supplémentaire (16) qui est constitué d'une matière plastique ou renferme une matière plastique, et par lequel ladite couche poreuse (14) est imprégnée, et
- une matière thermoplastique fluorée (22) située sur une surface (20) marquant la limite entre la couche poreuse (14) et le matériau supplémentaire (16), en vue de relier ledit matériau supplémentaire (16) à ladite couche poreuse (14),
le volume (V_{F}) de ladite matière thermoplastique fluorée occupant, dans ledit matériau composite stratifié, entre 5% et 50 % et, en particulier, entre 5 % et 25 % du volume des pores (V_{P}).

2. Matériau composite stratifié selon la revendication 1,
**caractérisé par le fait que** la matière thermoplastique fluorée (22) consiste en du PFA, du FEP, de l'ETFE, du PVDF, du PCTFE, ou en un mélange de ces derniers.

3. Matériau composite stratifié selon l'une des revendications précédentes,
**caractérisé par le fait que** la matière thermoplastique fluorée (22) se présente sous forme pulvérulente.

4. Matériau composite stratifié selon la revendication 3,
**caractérisé par le fait que** les particules de la matière thermoplastique fluorée (22) présentent une grosseur de grains de 100 µm ou moins.

5. Matériau composite stratifié selon l'une des revendications précédentes,
**caractérisé par le fait que** le matériau supplémentaire (16) est réalisé sous la forme d'une couche de glissement (18).

6. Matériau composite stratifié selon la revendication 5,
**caractérisé par le fait que** la couche de glissement (18) renferme un matériau à base de PTFE, ou est constituée dudit matériau.

7. Matériau composite stratifié selon la revendication 6,
**caractérisé par le fait que** la couche de glissement (18) renferme des adjuvants en matières thermodurcissables ou thermoplastiques, revêtant notamment la forme de particules (30) de matières thermodurcissables ou thermoplastiques.

8. Matériau composite stratifié selon la revendication 7,
**caractérisé par le fait que** la matière thermodurcissable ou thermoplastique consiste en du PFA, du FEP, de l'ETFE, du PVDF, du PCTFE, du PEEK, du PPS, du PA, du PPA, du LCP, du PES, du PSU, du PEI, du PPTA, du PBA, du PI, du PAI ou du PPSO₂, voire en un mélange de ces derniers.

9. Matériau composite stratifié selon l'une des revendications 5 à 8, **caractérisé par le fait que** la couche de glissement (18) renferme des lubrifiants solides (24), des particules dures (26) et/ou des fibres (28).

10. Matériau composite stratifié selon la revendication 9,
**caractérisé par le fait que** les lubrifiants solides (24) consistent en du MoS₂, du WS₂, du h-BN, du Pb, du Sn, du PbO, du Zn, du ZnS, du BaSO₄, du SnS₂, en du graphite, du CaF₂, ou en des silicates en couches.

11. Matériau composite stratifié selon la revendication 9 ou 10,
**caractérisé par le fait que** les particules dures (26) consistent en du SiC, du Si₃N₄, du BC, du c-BN, ou en des oxydes métalliques.

12. Matériau composite stratifié selon l'une des revendications 9 à 11,
**caractérisé par le fait que** les fibres (28) sont des fibres de verre, de carbone ou d'aramide.

13. Matériau composite stratifié selon l'une des revendications précédentes,
**caractérisé par le fait que** la couche poreuse (14) renferme de l'aluminium et/ou du cuivre, et/ou des alliages de ces derniers.

14. Matériau composite stratifié selon l'une des revendications précédentes,
**caractérisé par** le fait la couche poreuse (14) renferme une poudre frittée, une mousse de métal, un métal déployé, un non-tissé ou un matériau tissé.

15. Matériau composite stratifié selon l'une des revendications précédentes,
**caractérisé par le fait que** le corps de base (12) renferme de l'acier, de l'aluminium et/ou du cuivre, et/ou des alliages de ces derniers.

16. Utilisation d'une matière thermoplastique fluorée (22) pour relier un matériau supplémentaire (16) à une couche poreuse (14) d'un matériau composite stratifié (10) conforme à l'une des revendications précédentes, ladite matière thermoplastique fluorée (22) étant située sur une surface (20) marquant la limite entre ladite couche poreuse (14) et ledit matériau supplémentaire (16).

17. Procédé de fabrication d'un matériau composite stratifié (10) conforme à l'une des revendications 1 à 15, incluant les étapes suivantes :
- dépôt d'une matière thermoplastique fluorée (22) sur une couche poreuse (14), le volume (V_{F}) de ladite matière thermoplastique fluorée occupant, dans ledit matériau composite stratifié, entre 5% et 50 % et, en particulier, entre 5 % et 25 % du volume des pores (V_{P}),
- consignation à demeure de ladite matière thermoplastique fluorée (22) sur ladite couche poreuse (14), au moyen d'un traitement thermique,
- imprégnation de ladite couche poreuse (14) par un matériau supplémentaire (16), et
- solidarisation par collage de ladite couche poreuse (14) et dudit matériau supplémentaire (16).

18. Procédé selon la revendication 17,
**caractérisé par le fait que** la matière thermoplastique fluorée (22) est déposée sur la couche poreuse (14) sous la forme d'une poudre ou d'une dispersion.
